# EUROPÄISCHE PATENTANMELDUNG

(11) **EP 2 827 041 A1**
(43) Veröffentlichungstag der Anmeldung: **21.01.2015**
(21) Anmeldenummer: 13177015.8
(22) Anmeldetag: 18.07.2013
(51) Int. Cl.: F16L 59/02, F16L 5/04

(54) **Isoliermaterial sowie Isolierung für ein Rohr im Bereich einer Wand- oder Deckendurchführung**

(71) Anmelder: HILTI Aktiengesellschaft, 9494 Schaan (LI)
(72) Erfinder: Förg, Christian, 86862 Lamerdingen (DE)
(74) Vertreter: Hilti Aktiengesellschaft Corporate Intellectual Property

(57) **Zusammenfassung**

Ein Isoliermaterial (12) zur Verwendung an einem wärmeleitenden Rohr (14) ist vorgesehen, das eine Außenfläche (22) und eine Innenfläche (20) aufweist, die bei Verwendung an dem zu isolierenden Rohr (14) anliegt, wobei die Außenfläche (22) bei Verwendung an dem zu isolierenden Rohr (14) einen Außenumfang des Isoliermaterials (12) definiert, welcher über die axiale Länge des Isoliermaterials (12) variiert. Ferner ist eine Isolierung (10) beschrieben.

## Beschreibung

Die Erfindung betrifft ein Isoliermaterial zur Verwendung an einem wärmeleitenden Rohr sowie eine Isolierung für ein Rohr im Bereich einer Wand- oder Deckendurchführung.

Aus dem Stand der Technik ist es bekannt, eine Wand oder eine Decke durchdringende Rohre brandschutztechnisch abzusichern, um eine Brandweiterleitung zu verhindern. Zur brandschutztechnischen Absicherung werden typischerweise Mineralwollfaserschalen von etwa 1 m Länge als Isoliermaterial verwendet, die um das abzusichernde Rohr gelegt werden. Das verwendete Isoliermaterial reicht dabei bis an die Wand und wird auf beiden Seiten der Wand angebracht. Zur Verhinderung eines Durchbrands wird zudem ein Ringspalt in der Wand, welcher entsteht, wenn das Rohr durch eine Wandöffnung geführt wird, mit einer Dichtmasse abgedichtet. Die Dicke des verwendeten Isoliermaterials ist dabei von der maximal erlaubten Temperatur im Bereich der Wand und den zu erwartenden Temperaturen abhängig.

Bei den bekannten Isoliermaterialien hat sich als nachteilig herausgestellt, dass deren Isolierwirkung so gut ist, dass bei sehr gut wärmeleitenden Rohren, wie etwa Aluminiumrohren, an der von der Wand abgewandten Seite der Isolierung eine erhöhte Temperatur auftritt, die außerhalb des gewünschten Temperaturbereichs liegt. Zum Teil stieg die Temperatur über den kritischen Bereich an, d.h. es wurde ein Temperaturanstieg von über 180°K beobachtet. Hierdurch ist die Möglichkeit der Brandweiterleitung über das erhitzte Rohr gegeben.

Es ist daher Aufgabe der Erfindung, ein Isoliermaterial bereitzustellen, welches garantiert, dass die Temperatur nach der Isolierung stets im gewünschten Bereich liegt.

Die Aufgabe wird erfindungsgemäß durch ein Isoliermaterial zur Verwendung an einem wärmeleitenden Rohr gelöst, mit einer Außenfläche und einer Innenfläche, die bei Verwendung an dem zu isolierenden Rohr anliegt, wobei die Außenfläche bei Verwendung an dem zu isolierenden Rohr einen Außenumfang des Isoliermaterials definiert, welcher über die axiale Länge des Isoliermaterials (entspricht der axialen Ausdehnung des Rohres) variiert. Somit kann die Isolationswirkung des Isoliermaterials über die axiale Länge variieren, sodass beispielsweise in einem Bereich eine gute Isolierung und in einem anderen Teil eine höhere Wärmeabgabe möglich ist. Allgemein kann dadurch die Feinabstimmung der Isolierung verbessert werden.

Gemäß einem Aspekt der Erfindung ist vorgesehen, dass sich der Außenumfang zu einem freien Ende des Isoliermaterials hin verkleinert, d.h. die Dicke des Isoliermaterials nimmt von der Wand oder Decke ausgehend in axialer Richtung des Rohres ab. Hierdurch werden eine hohe Isolation im Bereich der Wand und eine höhere Wärmeabgabe zum freien Ende des Isoliermaterials hin erreicht, sodass die hohen Temperaturen im Wandbereich nicht bis zum freien Ende verschleppt werden. Insgesamt kann so die Wärmeabgabe über die axiale Länge des Isoliermaterials weitestgehend konstant gehalten werden.

Insbesondere ist der Außenumfang im Bereich einer Wand, durch die das zu isolierende Rohr durchtritt, am größten. Dies bietet den Vorteil, dass die Isolierung im Bereich der Wand am größten ist, da dort die zu erwartenden Temperaturen ebenfalls die höchsten sind.

Gemäß einem weiteren Aspekt der Erfindung ist vorgesehen, dass das Isoliermaterial einen Abschnitt aufweist, der sich mit dem zu isolierenden Rohr durch eine Wandöffnung erstreckt. Dies bedeutet, dass das Isoliermaterial durch eine Wandöffnung geschoben werden kann, wodurch das Isoliermaterial auch innerhalb der Wand vorhanden ist. Hierdurch wird erreicht, dass das zu isolierende Rohr auf beiden Seiten der Wand, durch welche sich das Rohr erstreckt, isoliert ist. Ferner kann auf eine Dichtmasse im Ringspalt verzichtet werden, wenn der Abschnitt an die Wandöffnung entsprechend angepasst ist.

Insbesondere verläuft die Außenfläche im Wesentlichen kegelförmig oder kegelstumpfförmig. Dies stellt eine optimale Geometrie des Isoliermaterials dar, wodurch ein sehr guter Kompromiss zwischen Isolierung und Wärmeabgabe möglich ist, sodass ein gleichmäßiger Temperaturverlauf über die gesamte axiale Länge des Isoliermaterials erreicht wird.

Ein weiterer Aspekt der Erfindung sieht vor, dass die Innenfläche strukturiert ist, insbesondere Noppen oder konische und/oder keilförmige Rippen aufweist. Über die Strukturierung wird erreicht, dass das Isoliermaterial beim Umwickeln des Rohres bestens eingestellt ist, insbesondere an unterschiedliche Rohrradien. Zudem kann über die Strukturierung das Isolations- und Wärmeabgabeverhalten eingestellt werden.

Ferner ist vorgesehen, dass die Außenfläche im Querschnitt annähernd hyperbelförmig verläuft. Hiermit kann das Isoliermaterial hinsichtlich seiner Wärmeleitfähigkeit und seiner Isolationseigenschaft optimal auf den Temperaturverlauf angepasst werden, sodass die Temperatur über die axiale Länge konstant ist.

Ein weiterer Aspekt der Erfindung sieht vor, dass das Isoliermaterial aus einem sehr elastischen Isolationsmaterial, insbesondere einem Isolationsschaum oder Mineralwolle besteht. Diese Materialien eignen sich besonders gut, da sie sehr gut formbar sind und somit einfach um das zu isolierende Rohr gelegt werden können.

Geeignete Materialien, die keine Intumeszenz im Brandfall zeigen, sind beispielsweise Polyethylen (PE), Polyurethan (PUR), Kautschuk oder Ethylen-Propylen-Dien-Monomer (EPDM).

Alternativ, insbesondere, wenn größere Ringspalte bis etwa 10 mm abzudichten sind, können auch intumeszierende Schaumstoffe verwendet werden. Diese bestehen aus einem schäumbaren Bindemittel, das ein intumeszierendes Stoffgemisch enthält. Das Bindemittel dient dabei als verbundbildender Träger für das intumeszierende Stoffgemisch. Bevorzugt ist das Stoffgemisch homogen in dem Bindemittel verteilt. Der verbundbildenden Träger ist bevorzugt aus der Gruppe ausgewählt, bestehend aus Polyurethanen, Phenolharzen, Polystyrolen, Polyolefinen, wie Polyethylen und/oder Polybutylen, Melaminharzen, Melaminharzschäumen, synthetischem oder natürlichem Kautschuk, Cellulose, Elastomeren und Gemischen davon, wobei Polyurethane bevorzugt sind.

Das aschebildende und gegebenenfalls intumeszierende Stoffgemisch umfasst die üblichen und dem Fachmann bekannten Brandschutzadditive, welche im Brandfall, also unter Hitzeeinwirkung aufschäumen und dabei einen die Flammenausbreitung hindernden Schaum ausbilden, wie ein intumeszierendes Material auf der Grundlage eines Säurebildners, einer Kohlenstoff liefernden Verbindung und eines Gasbildners. Bevorzugt umfasst das intumeszierende Material als Säurebildner, ein Salz oder ein Ester einer anorganischen, nichtflüchtigen Säure ausgewählt aus Schwefelsäure, Phosphorsäure und Borsäure, als Kohlenstoff liefernde Verbindung eine Poly-hydroxyverbindung und/oder ein thermoplastisches oder duroplastisches polymeres Harzbindemittel und als Gasbildner ein Chlorparaffin, Melamin, eine Melaminverbin-dung, insbesondere Melamincyanurat, Melaminphosphat, Melaminpolyphosphat, Tris(hydroxyethyl)-cyanurat, Cyanamid, Dicyanamid, Dicyandiamid, Biguanidin und/oder ein Guanidinsalz, insbesondere Guanidinphosphat oder Guanidinsulfat.

Der verbundbildende Träger kann ferner als ablatives Additiv, eine anorganische Verbindung, die Wasser, z.B. als Kristallwasser, fest eingelagert hat und bei Temperaturen bis 100°C nicht austrocknet, dieses aber im Brandfall ab 120°C freisetzt und dadurch temperaturführende Teile kühlen kann, enthalten, bevorzugt ein bei der Brandtemperatur bzw. bei Beflammung wasserabgebendes anorganisches Hydroxid oder Hydrat, insbesondere Aluminiumhydroxid, Aluminiumoxidhydrate oder teilhydratisierte Aluminiumhydroxide. Es kommen aber auch andere, bei der Beflammung wasserabgebende anorganische Hydroxide oder Hydrate in Betracht, wie sie in der EP 0 274 068 A2 beschrieben sind.

Derartige Verbindungen, die als Stoffgemisch in der erfindungsgemäßen BrandschutzEinlage eingesetzt werden können, sind dem Fachmann bekannt und beispielsweise in den folgenden Druckschriften offenbart, auf die hiermit ausdrücklich Bezug genommen sei: DE 30 25 309 A1, DE 30 41 731 A1, DE 33 02 416 A1, DE 34 11 327 A1, EP 0 043 952 B1, EP 0 051 106 B1, EP 0 061 024 B1, EP 0 116 846 B1, EP 0 158 165 B1, EP 0 274 068 A2, EP 1 347 549 A1, EP 1 641 895 B1 und DE 196 53 503 A1.

Die Herstellung der Brandschutzeinlage ist beispielsweise durch Formschäumen, wie Reaktionsschäumen (RIM), entsprechend der DE 3917518, z.B. mit Fomox®-Brandschutzschaum oder dem dämmschichtbildenden Baustoff HILTI CP 65GN, möglich. Materialien, die für erfindungsgemäße Zwecke eingesetzt werden können, sind aus EP 0061024 A1, EP 0051106 A1, EP 0043952 A1, EP 0158165 A1, EP 0116846 A1 und US 3,396,129 A sowie EP 1347549 A1 bekannt. Bevorzugt besteht der Formkörper aus einem intumeszenzfähigen Polyurethanschaum, wie er aus der EP 0061024 A1, DE 3025309 A1, DE 3041731 A1, DE 3302416 A und DE 3411 327 A1 bekannt ist.

Ein weiterer Aspekt der Erfindung sieht vor, dass eine Gewebeeinlage vorgesehen ist, insbesondere im Bereich der Innenfläche. Die Gewebeeinlage dient dabei der besseren Wickelbarkeit des Isoliermaterials.

Das Isoliermaterial kann einteilig oder aus mehreren Lagen bestehend ausgebildet sein. Bei der einteiligen Ausführung des Isoliermaterials besteht dieses aus einer beispielsweise keilförmigen Matte, welche um das zu isolierende Rohr gewickelt wird. Alternativ ist es auch möglich, dass das Isoliermaterial aus mehreren Lagen besteht, wobei sich die Zahl der Lagen zur Wand, durch die das Rohr sich erstreckt, erhöht. So wird ein annähernd keilförmiger Querschnitt der Isolation erhalten, welcher aufgrund der Lagen stufenförmig verläuft.

Ein weiterer Aspekt der Erfindung ist es, dass das Isoliermaterial an der Außenfläche ein zusätzliches Klebeband aufweist, insbesondere ein Klebeband mit Glasfaserfilamenten. Mit diesem Klebeband ist sichergestellt, dass das angelegte Isoliermaterial am Rohr fixiert ist. Die Glasfaserfilamente schmelzen bei erhöhten Temperaturen an, und es bildet sich ein keramikartiges Material-Schmelz-Zersetzungsprodukt aus, welches die sichere Fixierung des Isoliermaterials an dem zu isolierenden Rohr garantiert.

Die Erfindung betrifft ferner eine Isolierung für ein Rohr im Bereich einer Wand- oder Deckendurchführung, mit einem Isoliermaterial, welches das Rohr umgibt, wobei sich das Isoliermaterial bis an die Wand oder Decke erstreckt oder durch die Durchführung selbst hindurch erstreckt, wobei die Isolierung am der Durchführung zugewandten axialen Ende einen größeren Durchmesser hat als am von der Durchführung abgewandten axialen Ende. Für eine derartige Isolierung ist ein Isoliermaterial der zuvor genannten Art verwendbar, wobei die zuvor genannten Vorteile analog für die Isolierung gelten.

Das erfindungsgemäße Isoliermaterial und die erfindungsgemäße Isolierung wird zur Isolation von Rohrleitungen, insbesondere wärmeleitenden Rohren verwendet, wobei die Rohre selbst bereits mit einer - nicht brandschutztechnisch ausgerüsteten - Isolierung versehen sein können.

Die Isolierung kann als Rohrschale oder als Rollenware gefertigt sein, wobei die Rollenware bevorzugt ist.

Weitere Vorteile und Merkmale der Erfindung ergeben sich aus der nachfolgenden Beschreibung und aus den nachfolgenden Zeichnungen, auf die Bezug genommen wird. In den Zeichnungen zeigen:
- Figur 1: eine erste Ausführungsform der erfindungsgemäßen Isolierung in einer Schnittdarstellung,
- Figur 2: eine zweite Ausführungsform der Isolierung,
- Figur 3: eine dritte Ausführungsform der Isolierung,
- Figur 4: eine vierte Ausführungsform der Isolierung,
- Figur 5: eine fünfte Ausführungsform der Isolierung,
- Figur 6: eine sechste Ausführungsform der Isolierung, und
- Figur 7: ein Diagramm des Temperaturverlaufs entlang verschiedener Isolierungen.

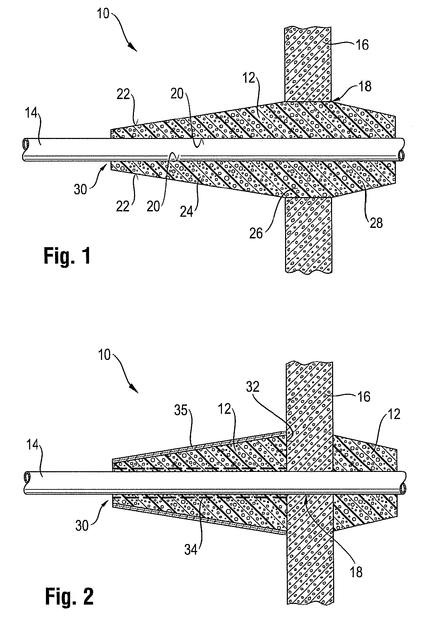

In Figur 1 ist eine Isolierung 10 gezeigt, welche ein Isoliermaterial 12 umfasst. Das Isoliermaterial 12 umgibt dabei ein Rohr 14, welches durch eine Wand 16 im Bereich einer Wanddurchführung 18 hindurchtritt.

Das Isoliermaterial 12 weist eine Innenfläche 20 auf, die zu dem Rohr 14 gerichtet ist, sowie eine Außenfläche 22, welche der Innenfläche 20 entgegengesetzt ist. Das Isoliermaterial 12 ist um das Rohr 14 gewickelt, sodass es das Rohr 14 umfangsmäßig umschließt.

In der gezeigten Ausführungsform ist das Isoliermaterial 12 einteilig ausgebildet und kann in drei Abschnitten unterteilt werden, einem ersten Abschnitt 24, einem zweiten Abschnitt 26 sowie einem dritten Abschnitt 28.

Der erste Abschnitt 24 erstreckt sich von einem ersten freien Ende 30 des Isoliermaterials 12 zur Wand 16, wo er in den zweiten Abschnitt 16 übergeht, der sich über die Länge der Wanddurchführung 18 erstreckt, um dann in den dritten Abschnitt 28 aus Sicht des ersten Abschnitts 24 hinter der Wand 16 zu münden. Der dritte Abschnitt 28 erstreckt sich wiederum von der Wand 16 einem zweiten freien Ende des Isoliermaterials 12, welches nicht gezeigt ist.

Der erste und der dritte Abschnitt 24, 28 sind spiegelsymmetrisch zur Wand 16, wobei die Außenfläche 22 des Isoliermaterials 12 im ersten Abschnitt 24 sowie im dritten Abschnitt 28 relativ zum Rohr 14 geneigt verläuft, sodass der erste und der dritte Abschnitt 24, 28 im Querschnitt keilförmig sind.

Dies bedeutet, dass der Außenumfang des um das Rohr gewickelten Isoliermaterials 12 sich über die axiale Länge des Isoliermaterials 12 ändert, wobei der Außenumfang des zweiten Abschnitts 26 den größten Durchmesser der Isolierung 10 aufweist. Der zweite Abschnitt 26 ist dabei derart ausgebildet, dass er die Wanddurchführung 18 dichtend abschließt.

Die Innenfläche 20 des Isoliermaterials 12 verläuft über die gesamte axiale Länge des Isoliermaterials 12 parallel zum Rohr 14, wobei die Innenfläche 20 stets am Rohr 14 anliegt.

In Figur 2 ist eine zweite Ausführungsform der Isolierung 10 gezeigt, wobei die Isolierung 10 ein Isoliermaterial 12 aufweist, welches im Gegensatz zu der ersten Ausführungsform nicht durch die Wanddurchführung 18 geführt ist, sondern mit einer Anlagefläche 32 an der Wand 16 anliegt.

Das Isoliermaterial 12 der zweiten Ausführungsform aus Figur 2 entspricht etwa dem ersten Abschnitt 24 des Isoliermaterials 12 der ersten Ausführungsform aus Figur 1. Das um das Rohr 14 gewickelte Isoliermaterial 12 der zweiten Ausführungsform nach Figur 2 ist kegelstumpfförmig ausgebildet, wobei der Außenumfang des Isoliermaterials 12 im Bereich der Wand 16 bzw. bei der Anlagefläche 32 am größten ist. Im Querschnitt ergibt sich über die gesamte axiale Ausdehnung des nicht gewickelten Isoliermaterials 12 eine Keilform.

Die Isolierung 10 gemäß der zweiten Ausführungsform weist wie in Figur 2 dargestellt zwei Isoliermaterialien 12 auf, die jeweils auf beiden Seiten der Wand 16 angeordnet sind, wobei die Isoliermaterialien 12 mit dem größeren Außenumfang jeweils zur Wand 16 gerichtet sind und über die Anlagefläche 32 an der Wand 16 anliegen.

Ferner ist in der Ausführungsform gemäß der Figur 2 eine Gewebeeinlage 34 vorgesehen, welche im Bereich der Innenfläche 20 des Isoliermaterials 12 angeordnet ist. Durch die Gewebeeinlage 34 kann das Isoliermaterial 12 besser um das Rohr 14 gewickelt werden, da die Gewebeeinlage 34 gerade bei einem weichen Isoliermaterial 12 Stabilität verleiht.

Die um die Rohre 14 gewickelten Isoliermaterialien 12 werden bevorzugt von einem Klebeband 35 fixierend in ihrer Form gehalten, wobei das Klebeband 35 mit Glasfaserfilamenten versehen ist, welche bei hohen Temperaturen anschmelzen und so ein keramikartiges Material-Schmelz-Zersetzungsprodukt bilden. Dies weist eine sehr hohe Reißfestigkeit auf und garantiert dadurch, dass das Isoliermaterial 12 auch unter extremen Bedingungen formschlüssig am Rohr 14 anliegt.

Das Klebeband 35 ist mindestens zweilagig um das Isoliermaterial 12 gewickelt, wobei die Lagen nicht parallel zueinander verlaufen, da so eine bessere Fixierung beim Anschmelzen der Glasfaserfilamente erreicht wird.

Alternativ zu dem Klebeband 35 mit Glasfaserfilamenten kann auch ein Filamentklebeband verwendet werden.

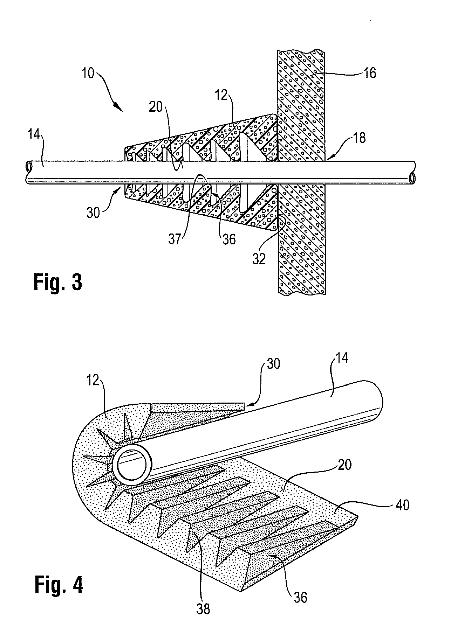

Figur 3 zeigt eine dritte Ausführungsform der Isolierung 10, wobei sich die dritte Ausführungsform von der zweiten Ausführungsform dahingehend unterscheidet, dass die Innenfläche 20 nicht stets am Rohr 14 anliegt, sondern eine Strukturierung 36 aufweist.

In der gezeigten Ausführungsform ist die Strukturierung 36 durch Noppen 37 ausgebildet, wodurch das Isoliermaterial 12 lediglich über die Noppenspitzen der Strukturierung 36 am Rohr 14 anliegt.

Das Isoliermaterial 12 ist dennoch im Querschnitt keilformartig ausgebildet, sodass sich der Außenumfang des gewickelten Isoliermaterials 12 sich zum freien Ende 30 hin verjüngt, wobei der Außenumfang des Isoliermaterials 12 im Bereich der Wand 16 bzw. der Anlagefläche 32 wiederum am größten ist.

Die Noppen 37 können insbesondere eine unterschiedliche Tiefe aufweisen.

Ein solches Isoliermaterial 12 kann beispielsweise dadurch hergestellt werden, dass ein normaler Noppenschaum hergestellt wird, dessen Noppentiefe unterschiedlich ist, wobei ein diagonaler Schnitt erfolgt, sodass das im Querschnitt keilförmige Isoliermaterial 12 mit unterschiedlich tiefen Noppen 37 entsteht.

In Figur 4 ist eine vierte Ausführungsform der Isolierung 10 gezeigt, welche ebenfalls wie die dritte Ausführungsform gemäß Figur 3 eine Strukturierung 36 auf der Innenfläche 20 aufweist.

Die Strukturierung 36 in der vierten Ausführungsform besteht aus konisch gestalteten Rippen 38, die im Querschnitt keilförmig verlaufen und beim Umwickeln des Rohres 14 an diesem anliegen. Durch die konischen Keilrippen 38 ist es möglich, das Isoliermaterial 12 um das Rohr 14 in einfacher Weise zu wickeln.

Das Isoliermaterial 12 gemäß der vierten Ausführungsform weist zusätzlich zu den Rippen 38 einen rippenfreien Anlagebereich 40 auf.

Beim Umwickeln des Rohres 14 liegt das Isoliermaterial 12 über die Innenfläche 20 derart am Rohr 14 an, dass die Rippen 38 zur Wand 16 angeordnet sind, sodass dort der Außenumfang des Isoliermaterials 12 am größten ist. Zum freien Ende 30 hin verjüngt sich der Durchmesser des Isoliermaterials 12 aufgrund der konisch geformten Keilrippen 38, wobei die Keilrippen 38 in den Anlagebereich 40 übergehen, welcher umfangsmäßig vollständig am Rohr 14 anliegt.

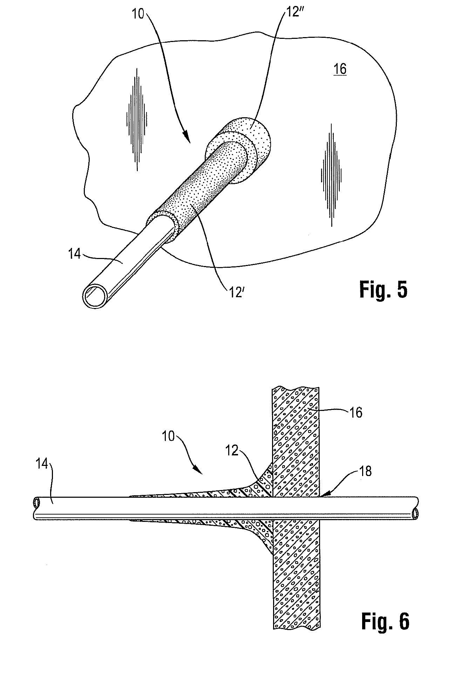

Figur 5 zeigt eine fünfte Ausführungsform der erfindungsgemäßen Isolierung 10, wobei die Isolierung 10 gemäß der fünften Ausführungsform aus mehreren Lagen Isoliermaterial 12', 12" bestehend ausgebildet ist.

Das Rohr 14 wird dabei zunächst von einer ersten Lage Isoliermaterial 12' bis zur Wand 16 umwickelt. Anschließend wird im Bereich der Wand 16 eine zweite Lage Isoliermaterial 12" um das Rohr 14 und die erste Lage Isoliermaterial 12' gewickelt. Hierdurch wird erreicht, dass die gesamte Isolierung 10, welche aus mehreren Lagen Isoliermaterial 12', 12" besteht, im Bereich der Wand 16 den größten Außenumfang aufweist. Dies gewährleistet eine Isolierung 10, die im Querschnitt eine stufenförmige und annähernd keilförmige Gestalt aufweist.

Anstatt der zweistufigen Isolierung 10 ist auch eine drei- oder noch mehrstufigere Isolierung 10 denkbar, wobei die Anzahl der Lagen die Feinjustierung der Isolationswirkung bzw. der Wärmeabgabe erhöht.

Eine derartig aufgebaute Isolierung 10 ist aus einfachen bzw. handelsüblichen Isoliermaterialien 12, welche als normale Isolierdämmstoffmaterialien ausgebildet sind, realisierbar.

In Figur 6 ist eine sechste Ausführungsform der erfindungsgemäßen Isolierung 10 gezeigt, welche eine an die Gegebenheiten optimal angepasste Isolierung 10 darstellt. Die Isolierung 10 gemäß der sechsten Ausführungsform besteht aus einem Isoliermaterial 12, welches einen Außenumfang aufweist, der im Querschnitt hyperbelförmig ausgebildet ist. Dies wird auch als Elefantenfuß bezeichnet, wobei der Außenumfang des Isoliermaterials 12 im Bereich der Wand 16 am größten ist und zum freien Ende 30 hin sich derart verjüngt, dass eine optimale Wärmeübertragung vom Rohr 14 an die Umgebung erreicht wird.

Die gezeigten Isolierungen 10 können allesamt derart ausgebildet sein, dass sie den Ringspalt der Wanddurchführung 18 abdichten, sodass auf ein zusätzliches, in den Ringspalt einzubringendes Material verzichtet werden kann.

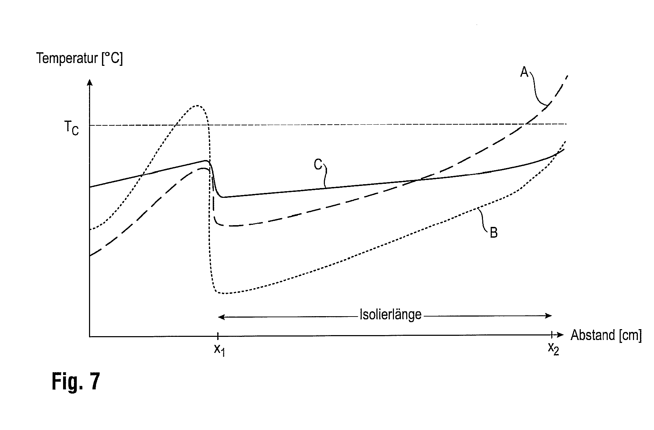

Allen gezeigten Ausführungsformen ist gemein, dass ein annähernd gleichmäßiger Temperaturverlauf bzw. eine annähernd gleichmäßige Wärmeabgabe über die gesamte axiale Länge des Isoliermaterials 12 möglich ist, wie dies aus einem Vergleich der Temperaturverläufe aus Figur 7 deutlich wird.

Figur 7 zeigt ein Diagramm des Temperaturverlaufs entlang eines isolierten Rohres 14, wobei die Temperatur außerhalb der Isolierung 10 gemessen worden ist. Als Hilfslinie ist eine Temperaturgrenze TC gestrichelt dargestellt, welche nicht überschritten werden sollte. Des Weiteren sind zwei Abstände x1 sowie x2 angegeben, die dem freien Ende 30 bzw. der Anlagefläche 32 des Isoliermaterials 12 entsprechen.

Insgesamt sind drei Kurven dargestellt, wobei
- die Kurve A den Temperaturverlauf einer Isolierung gemäß dem Stand der Technik mit einer geringen Materialstärke des Isoliermaterials,
- die Kurve B den Temperaturverlauf einer Isolierung gemäß dem Stand der Technik mit einer großen Materialstärke des Isoliermaterials und
- die Kurve C den Temperaturverlauf einer erfindungsgemäßen Isolierung 10 darstellt.

Anhand der Kurve A ist deutlich zu erkennen, dass die Temperatur den kritischen Wert TC im Bereich der Wand 16 bei x2 deutlich übersteigt, da die Materialstärke zu gering gewählt worden ist.

Die Kurve B verdeutlich das Problem einer zu kurz gewählten Länge des Isoliermaterials, da am freien Ende bei x1 ein starker Temperaturanstieg auftritt, sodass am freien Ende 30 die kritische Temperatur TC überschritten wird. Dies liegt daran, dass die Isolierung derart gut isoliert, dass keine Wechselwirkung mit der Umgebung möglich ist, sodass die hohe Temperatur von der Wand 16 zum freien Ende 30 der Isolierung verschleppt wird.

Der Temperaturverlauf der erfindungsgemäßen Isolierung 10, welcher durch die Kurve C dargestellt ist, verdeutlich, dass erfindungsgemäß ein annähernd konstanter Temperaturverlauf erreicht wird und vor allem die Temperatur über die gesamte axiale Länge der Isolierung 10 unterhalb der kritischen Temperatur TC liegt.

Aufgrund der unterschiedlichen Dicken der erfindungsgemäßen Isolierung 10 bzw. Isolierungsmaterial 12 entlang der axialen Länge wird somit erreicht, dass im Bereich der Wand 16 eine hohe Isolation vorliegt und kaum Wärme an die Umwelt bzw. Umgebung abgegeben wird. Die Isolierung 10 bzw. das Isolierungsmaterial 12 verringert dann ausgehend von dem Bereich der Wand 16 zum freien Ende 30 hin den Außenumfang, sodass die isolierende Wirkung leicht abnimmt und die Wärmeabgabe an die Umgebung zunimmt. Dadurch wird die Temperaturabgabe an die Umwelt annähernd konstant gehalten, wodurch kein schlagartiger Temperatursprung am freien Ende 30 des Isoliermaterials 12 auftritt.

Ferner ist es mit dem erfindungsgemäßen Isoliermaterial 12 möglich, dass das Isoliermaterial 12 eine kürzere Strecke im Vergleich zum Isoliermaterial aus dem Stand der Technik benötigt, um die gewünschte Isolierung bereitzustellen, sodass weniger Material verwendet werden muss, da dies gezielter und effizienter eingesetzt wird. Dies liegt vor allem daran, dass die Wärmeabgabe über die axiale Länge so groß ist, dass die Temperatur über die axiale Länge annähernd konstant, gerade unterhalb der kritischen Temperatur TC gehalten wird. Eine Delle des Temperaturverlaufs, wie dies beispielsweise bei dem Temperaturverlauf gemäß Kurve B der Fall ist, tritt nicht auf. Dadurch ist die gesamte, abgegebene Wärmemenge über die axiale Länge der Isolation 10 erfindungsgemäß größer.

Aufgrund der kürzeren Isolierungsstrecke, die benötigt wird, ist zudem die Anwendbarkeit der Isolation 10 verbessert, da auch Rohre 14 einfach abgesichert werden können, welche kurz nach dem Durchtritt abknicken.

Als Materialien für das Isoliermaterial 12 kommen bevorzugt Mineralwolle oder aufgrund der besseren Formbarkeit geschäumtes Material wie PE, PUR, Kautschuk oder EPDM zum Einsatz. Diese können flammenhemmend oder sogar intumeszierend ausgebildet sein. Die Materialeigenschaften sowie die entsprechende Ausgestaltung der Isolierung 10 bzw. Ausführungsform sind auf die zu erwartenden Rohrtemperaturen abzustimmen.

## Patentansprüche

1. Isoliermaterial (12) zur Verwendung an einem wärmeleitenden Rohr (14), mit einer Außenfläche (22) und einer Innenfläche (20), die bei Verwendung an dem zu isolierenden Rohr (14) anliegt, wobei die Außenfläche (22) bei Verwendung an dem zu isolierenden Rohr (14) einen Außenumfang des Isoliermaterials (12) definiert, welcher über die axiale Länge des Isoliermaterials (12) variiert.

2. Isoliermaterial (12) nach Anspruch 1, **dadurch gekennzeichnet, dass** sich der Außenumfang zu einem freien Ende (30) des Isoliermaterials (12) hin verkleinert.

3. Isoliermaterial (12) nach Anspruch 1 oder 2, **dadurch gekennzeichnet, dass** der Außenumfang im Bereich einer Wand (16), durch die das zu isolierende Rohr (14) durchtritt, am größten ist.

4. Isoliermaterial (12) nach einem der vorhergehenden Ansprüche, **dadurch gekennzeichnet, dass** das Isoliermaterial (12) einen Abschnitt (26) aufweist, der sich mit dem zu isolierenden Rohr (14) durch eine Wandöffnung (18) erstreckt.

5. Isoliermaterial (12) nach einem der vorhergehenden Ansprüche, **dadurch gekennzeichnet, dass** die Außenfläche (22) im Wesentlichen kegelförmig oder kegelstumpfförmig verläuft.

6. Isoliermaterial (12) nach einem der vorhergehenden Ansprüche, **dadurch gekennzeichnet, dass** die Innenfläche (20) strukturiert ist, insbesondere Noppen (37) oder konische und/oder keilförmige Rippen (38) aufweist.

7. Isoliermaterial (12) nach einem der vorhergehenden Ansprüche, **dadurch gekennzeichnet, dass** die Außenfläche (22) im Querschnitt annähernd hyperbelförmig verläuft.

8. Isoliermaterial (12) nach einem der vorhergehenden Ansprüche, **dadurch gekennzeichnet, dass** das Isoliermaterial (12) aus einem sehr elastischen Isolationsmaterial, insbesondere einem Isolationsschaum, das gegebenenfalls intumeszierend ausgebildet ist, oder Mineralwolle besteht.

9. Isoliermaterial (12) nach einem der vorhergehenden Ansprüche, **dadurch gekennzeichnet, dass** eine Gewebeeinlage (34) vorgesehen ist, insbesondere im Bereich der Innenfläche (20).

10. Isoliermaterial (12) nach einem der vorhergehenden Ansprüche, **dadurch gekennzeichnet, dass** das Isoliermaterial (12) einteilig oder aus mehreren Lagen (12', 12") bestehend ausgebildet ist.

11. Isoliermaterial (12) nach einem der vorhergehenden Ansprüche, **dadurch gekennzeichnet, dass** an der Außenfläche (22) ein zusätzliches Klebeband (35) vorgesehen ist, insbesondere ein Klebeband (35) mit Glasfaserfilamenten.

12. Isolierung (10) für ein Rohr (14) im Bereich einer Wand- oder Deckendurchführung (18), mit einem Isoliermaterial (12), welches das Rohr (14) umgibt, wobei sich das Isoliermaterial (12) bis an die Wand (16) oder Decke erstreckt oder durch die Durchführung (18) hindurch erstreckt, wobei die Isolierung (10) am der Durchführung (18) zugewandten axialen Ende einen größeren Durchmesser hat als am von der Durchführung (12) abgewandten axialen Ende (30).

13. Isolierung nach Anspruch 12, **dadurch gekennzeichnet, dass** sie als Rohrschale oder als Rollenware gefertigt ist.
